# EUROPEAN PATENT SPECIFICATION

(11) **EP 3 806 433 B1**
(45) Date of publication and mention of the grant of the patent: **22.11.2023**
(21) Application number: 20203136.5
(22) Date of filing: 25.03.2015
(51) Int. Cl.: H04W 12/02, H04W 4/02, H04L 69/16, H04L 69/28, H04L 61/5092, H04L 61/5038, H04W 12/30, H04W 8/26, H04W 12/71, H04W 12/63, H04L 101/622, H04L 101/69, H04W 84/12

(54) **MAC ADDRESS REPLACEMENT**
ÄNDERUNG EINER MAC-ADRESSE
CHANGEMENT D'UNE ADRESSE MAC

(30) Priority: 31.03.2014 US 201414230291
(43) Date of publication of application: 14.04.2021
(62) Divisional of application: 15717705.6
(73) Proprietor: Google LLC, Mountain View, CA 94043 (US)
(72) Inventor: SEDDON, David Antony, Mountain View, CA California 94043 (US)
(74) Representative: Colonna, Matthew Oliver

(56) References cited:
- EP-A1- 1 349 322
- US-A1- 2012 258 688
- US-A1- 2013 067 083
- GRUTESER M ET AL: "ENHANCING LOCATION PRIVACY IN WIRELESS LAN THROUGH DISPOSABLE INTERFACE IDENTIFIERS: A QUANTITATIVE ANALYSIS", WMASH 2003. PROCEEDINGS OF THE 1ST. ACM INTERNATIONAL WORKSHOP ON WIRELESS MOBILE APPLICATIONS AND SERVICES ON WLAN HOTSPOTS. SAN DIEGO, CA, SEPT. 19, 2003, 19 September 2003 (2003-09-19), pages 46-55, XP001046685, DOI: 10.1145/941326.941334 ISBN: 978-1-58113-768-2

## Description

### BACKGROUND

In a Wireless Local Area Network (WLAN) (e.g. Wi-Fi) or Bluetooth networked computing environment, mobile devices are identified by MAC addresses broadcast from the devices. MAC addresses include "media access control" (MAC) addresses with various numbering protocols, such as the IEEE 802, 48-bit address containing six groups of two hexadecimal digits. Permanent MAC addresses associated with Wi-Fi and Bluetooth components are often written into Read Only Memory (ROM). The use of MAC addresses to identify mobile devices is susceptible to other people tracking the travel of the device from one location to the next. Protocols that use permanent MAC addresses, associated with network interface hardware, are most susceptible to tracking. Devices may be tracked by installing Wi-Fi and/or Bluetooth radio receivers, typically in multiple locations, and recording the MAC addresses of any devices that come within range, which may be undesirable for some users.
US2013/0067083 A1 discloses a method and apparatus for transmitting data from a device in a communications system, including at the device, executing an application which generates data according to an application layer protocol and supplies the data to an access layer for transmission in a communication session over a first channel using a first wireless network interface; and receiving at the application an indication from the access layer of an alternate, second channel for transmission of the data, the second channel using a second network interface. On receipt of the indication, the application determines whether or not to take action responsive to the indication and, if it determines to do so, opens a second channel for the communication session and supplies data to the access layer for transmission over the second channel.

### BRIEF SUMMARY

The invention is defined by the appended independent claims. Advantageous embodiments are defined by the dependent claims.

A method for gracefully handling a MAC address replacement is disclosed, whereby two MAC addresses are simultaneously maintained long enough to allow open sockets to smoothly migrate to a alternate IP address associated with the alternate MAC address. The method is defined in claim 1.

The first event trigger may be a selection of a geographic location label, selection of a MAC address from a list of available addresses, or manual entry of a MAC address that acts as an instruction to enable a process to replace the MAC address of the computing device.

The first network and the second network address may be Internet Protocol (IP) version 4 (IPv4) or Internet Protocol (IP) version 6 (IPv6) addresses. The socket connection may be User Datagram Protocol (UDP), and a Transmission Control Protocol (TCP), and the network interface may be implemented in hardware, firmware or software.

Additional features, advantages, and implementations of the disclosed subject matter may be set forth or apparent from consideration of the following detailed description, drawings, and clauses. Moreover, it is to be understood that both the foregoing summary and the following detailed description are illustrative and are intended to provide further explanation without limiting the scope of the invention that is defined by the appended claims.

### BRIEF DESCRIPTION OF THE DRAWINGS

The accompanying drawings, which are included to provide a further understanding of the disclosed subject matter, are incorporated in and constitute a part of this specification. The drawings also illustrate implementations of the disclosed subject matter and together with the detailed description serve to explain the principles of implementations of the disclosed subject matter. No attempt is made to show structural details in more detail than may be necessary for a fundamental understanding of the disclosed subject matter and various ways in which it may be practiced.
FIG. 1 shows a computer according to an implementation of the disclosed subject matter.
FIG. 2 shows a network configuration according to an implementation of the disclosed subject matter.
FIG 3a shows a geographic location profile that lists network connectivity settings that are configurable by the user to support location dependent privacy.
FIG 3b shows a geographic location profile according to an implementation of the disclosed subject matter.
FIG 3c shows another geographic location profile according to an implementation of the disclosed subject matter.
FIG. 4 shows a flow diagram of the operation of the disclosed subject matter according to an implementation of the disclosed subject matter.
FIG. 5 describes an implementation of the method of gracefully handling a MAC address replacement, by maintaining two MAC and IP addresses simultaneously according to an implementation of the disclosed subject matter.

### DETAILED DESCRIPTION

Due to the ease with which individual devices may be identified based on permanent or semi-permanent identifiers such as MAC addresses, it may be desirable to obfuscate the identity of the permanent MAC address from all other devices on the network based on user- selectable and user-defined location settings. The disclosed subject matter provides these and other capabilities.

In an implementation of the disclosed subject matter, a location-based method of mobile device identity obfuscation is disclosed. User-defined geographic location profiles are created that permit replacement of a MAC address when entering the geographic location. This may serve to disrupt or prevent undesired tracking of the MAC address within the locality, consequently facilitating enforcement of user privacy.

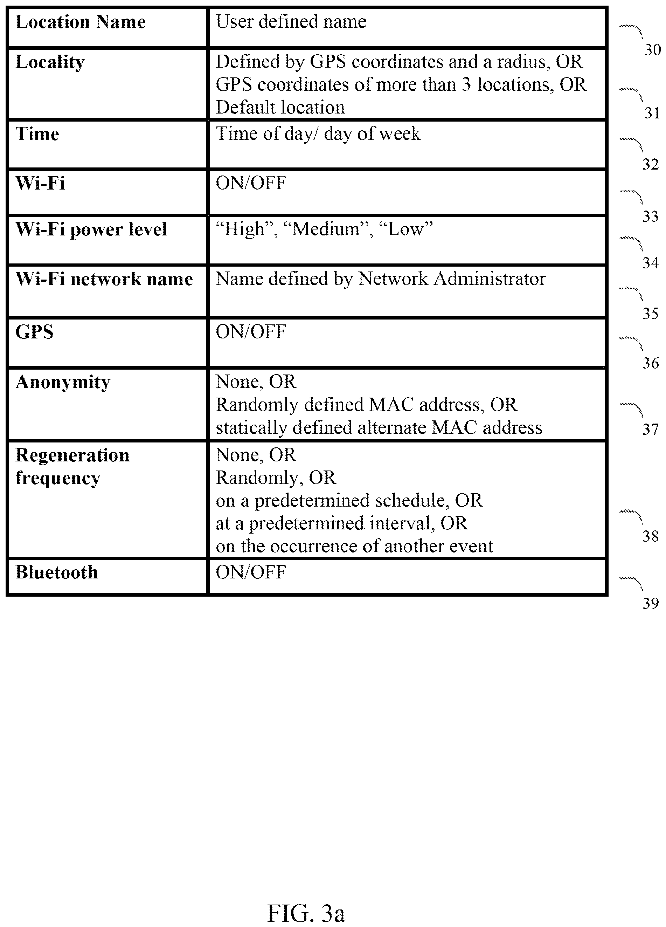

In an implementation of the disclosed subject matter, a method for obfuscating a device on a computer network may be based on enabling the user to define operations that a device may perform to obfuscate its device identifier (e.g. a MAC address) prior to or upon entering into specified geographic locations. FIG 3a shows a geographic location profile that lists network connectivity settings that are configurable by the user to support location dependent privacy. A location name 30 is specified, followed by a definition of the locality (e.g. geographic location) 31, a time of the day or week 32 when the profile is enforceable, and for each location, a toggle to enable or disable Wi-Fi 33, and if Wi-Fi is enabled, an output power level may be specified 34. Also, for each location, a Wi-Fi network name to which the computing device may connect may be specified 35. A field specifying whether to enable or disable the Global Positioning System (GPS) 36 while in the locality may also be provided. This capability potentially saves battery power when a user is in a known location for a period of time and location discovery based on GPS is unnecessary. Also, for each location, a MAC address changing protocol may be selected 37 to help provide user anonymity. If anonymity is not desired, a "none" setting can, for example, provide the default MAC address. The default MAC address may, for example, correspond to the permanent (e.g. burned-in) MAC address that may be set by a hardware manufacturer (e.g. a Network Interface Controller MAC address). If some degree of anonymity is desired, an alternate MAC address may be provided. The MAC address may be formed either by selecting a randomly defined alternate MAC address or a statically defined alternate MAC address. Moreover, the frequency of changing the alternate address (e.g. "Regeneration frequency") 38 may be automated to vary randomly, on a predetermined schedule, at a predetermined interval, or at the occurrence of another event (e.g. when Wi-Fi is disconnected). A field specifying whether to enable or disable Bluetooth networking 39 or similar local networking protocols may also be provided.

Localities may be defined by a single geographic location, plus a specified radial distance around that location, for example, a radius of 300 feet (100 meters). Alternatively, the locality may be defined by at least three (3) locations, where if the device remains within the boundary defined by the locations, then it is deemed to be at the locality. This option may be useful to define large properties, or campuses. Any implementation may allow the users to define the location by "where i am right now", as well as being able to highlight locations on a map or allow manually entered longitude and latitude coordinates. When not in one of the user defined locations, a default location may be provided. A locality also may be defined by a network access point or set of network access points, such as a Wi-Fi access point, or all Wi-Fi access points operated by a single entity. For example, Wi-Fi access points operated by a chain of coffee shops may be considered a "locality" even though the individual access points are geographically distributed, if they are identified as being operated by the same entity. Similarly, an access point at a single geographic location may be considered a "locality," such that if a user's device is connected to, or within range of connecting to the access point, the device is considered to be in the locality.

In an implementation, when the device loses connection with a defined wireless network (e.g. when the device's location exceeds the network range of the wireless signal), the device may wait a defined period of time (10s, 30s, Im...), and then if the network is still not in range, turn off the Wi-Fi, Bluetooth, or other networking capability. The GPS may also be enabled at this time, which would allow the device to automatically re-enable the Wi-Fi or Bluetooth networking capability, when it reaches another predefined location.

While the 48bit/6byte MAC address field yields a large number of usable addresses, not all combinations of bits would yield a usable/legitimate MAC address. As a result, implementations disclosed herein may include random selection of a usable/legitimate MAC address from pools of addresses from various different vendors.

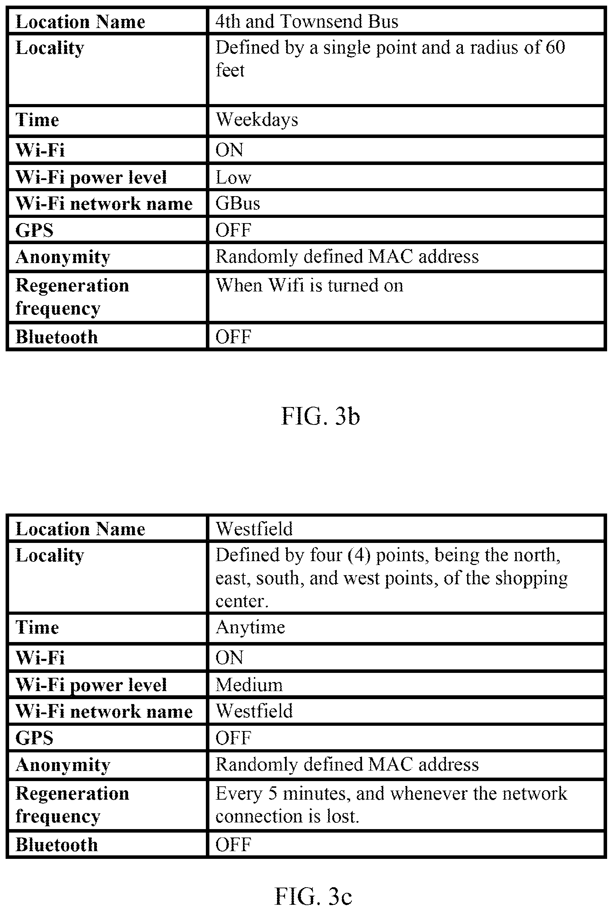

FIG 3b and FIG. 3c are example implementations of the settings of elements described in FIG 3a. In FIG 3b, the location name is defined as a vehicle (e.g. "4^{th} and Townsend Bus"). The locality is defined by the location of origin and within a radius of 60 ft from that location. The time is defined as "Weekdays", meaning Monday through Friday. In this location profile, the Wi-Fi is set "on", with a power level set to "low", and the user's computing device may connect to the "GBus" network, however, the GPS, and Bluetooth should be disabled and anonymity preserved by using a "randomly defined MAC address" that is regenerated when the Wi-Fi is turned on. In the implementation shown in FIG. 3c, the location name corresponds to a shopping center, and the locality is defined by four (4) points (e.g. four sets of coordinates) representing the north, east, south and west points of the shopping center, defining a geographic area. The settings should be active "anytime" the user enters the geographic area. Within the area, the Wi-Fi should be "on", with medium power level, and connectable with the "Westfield" network. The GPS, and Bluetooth should be disabled.
Anonymity is preserved by a "randomly defined MAC address", regenerating "every 5 minutes and whenever the network connection is lost".

In some implementations, the complexity of configuration options described might be too cumbersome to implement on a small device display. The described implementation may be implemented on a webpage or other user interface that allows the users to configure the advanced features using a web browser. Alternative implementations may implement the disclosed subject matter using reduced features sets and customized apps on mobile phones, smart-phones, and tablets.

In an implementation, a user may specify a network identifier to use with a particular locality, or may specify a set of network identifiers to use with any of a set of localities. For example, a user may select a MAC address that is always used when the user's device is connected to a particular Wi-Fi access point. Thus, the functionality of some features that rely upon recognition of a network identifier such as a MAC address may be preserved, while still allowing the user to establish protection of the user's identity and/or other privacy-related data.

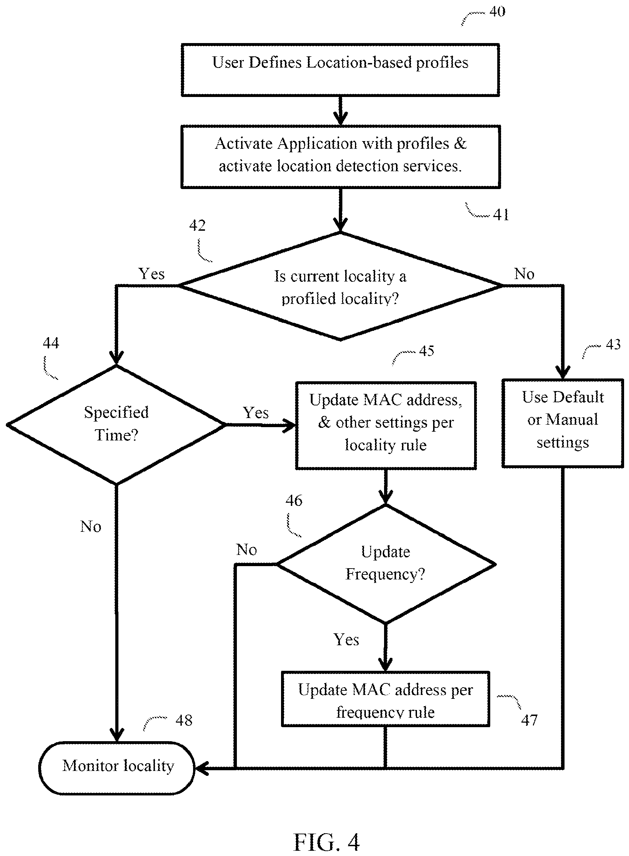

FIG. 4 shows a flow chart describing the operation of an implementation of the disclosed subject matter. A user defines the location-based profiles step 40 as shown in FIG. 3a, 3b, and 3c. In an implementation, a process automatically activates a previously stored location- based profile by detecting the geographical location of the device. The location monitoring application associated with the defined profile and location discovery processes (e.g. GPS-based location services, Wi-Fi access point identification, and the like) are activated on the computing device step 41. The application monitors the location reported by location services. If the current location of the computing device does not match one of the defined locations, the default or manual settings of the MAC address and other networking settings are used by the computing device step 43, and a location service on the computing device may be activated to monitor a change in location step 48. Alternatively, if a location match occurs at step 42, the specified time frame is compared against the real-time clock step 44. If the location profile matches the current time and date, the MAC address and other settings are updated according to the rule defined for that location (e.g., randomly defined MAC address and random regeneration frequency) step 45. If the Wi-Fi, Bluetooth, or other network setting is in a state opposite to that specified by the rule, it is changed to conform with the rule (e.g. ifWi-Fi is specified as enabled and is currently disabled, it is automatically enabled). If a regeneration frequency is specified for the location profile step 46, the MAC address is updated periodically as specified by the update frequency rule step 47. Thereafter, the location detection service is regularly monitored for a change in location step 48.

In some implementations of the method discussed above, the MAC address may periodically changed during use. One outcome of changing MAC addresses during use of a network is an interruption of network service and a resulting loss of data. To reduce the impact of this disruption of service, an old UDP/TCP socket ("connection") may be maintained with the established MAC address, while simultaneously another socket with another MAC address is opened. The originally-established MAC address remains in use so long as processes begun prior to implementing the new alternate MAC address remain in service and a predetermined time period has not lapsed (e.g. lapse of a migration timer). If the MAC addresses use the standard IP address allocation processes, in the case ofIPv4 it would typically use DHCP and in IPv6 the standard neighbor discovery, the device would have dual MACs, and also dual IP addresses (IPs).

In order to reduce the overhead of maintaining two (2) sockets with two (2) disparate MAC addresses, it may be desirable to smoothly migrate network connections to the new IP address. To accomplish this, in one implementation, the device would continue to maintain any UDP/TCP sockets that are currently bound to the existing MAC+IP pair, however any new UDP/TCP connections would use the new, alternate IP. In this way, as the existing TCP connections are closed when the application has finished a transfer, eventually there would be zero (0) remaining TCP connections bound to the previously established IP address. Since UDP sockets are typically short lived, e.g. for DNS lookups, the migration would likely bequick.
Some applications, however, may maintain long lived TCP connections that therefore would not be closed in a timely manner. To ensure the migration does happen, there may be, for example, a configurable upper limit for the system to wait for connections to close, after which the connections would immediately be closed (e.g. using a migration timer). Additionally, many applications may be configured with a retry capability, such that the interruption to a process is brief.

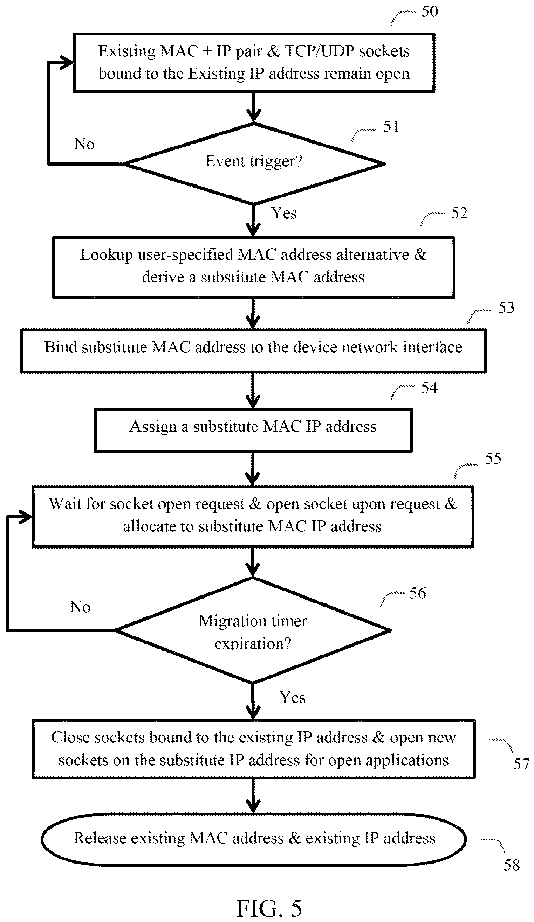

FIG. 5 describes an implementation of the method of gracefully handling a MAC address replacement, by maintaining two MAC and two IP addresses simultaneously long enough to allow open sockets to smoothly migrate to a new, alternate IP address associated with the alternate MAC address. An existing MAC + IP pair and any TCP/UDP sockets bound to the existing IP address remain open in step 50. An event trigger (e.g. time or location) induces a change in the MAC address in step 51. A new, alternate MAC address is allocated at step 52, such as by a process as previously described for the location profiles, and is bound to the device network interface as an alternate MAC address step 53. The network interface would have provisions to bind both the old, existing MAC address and the new, alternate MAC address simultaneously. The Network Layer Internet Protocol (IP) address is assigned by normal processes step 54, such that the alternate MAC address would also have a new, alternate IP address. At this point, the computing device would have an existing MAC + IP pair and existing TCP/UDP sockets, bound to the existing IP address. Simultaneously, an alternate MAC+ IP pair is present, and for a short period of time, zero (0) TCP/UDP sockets are bound to the alternate IP address. Any new socket open requests to the operating system are allocated to the alternate IP address instead of the existing IP address, step 55. Existing sockets continue to operate until a migration timer expires, step 56, at which time the sockets bound to the existing IP address are closed. The applications are expected to gracefully handle the socket closing, and merely reopen new sockets that the operating system allocates to the alternate IP address, step
57. The old, existing MAC+ IP pairs would subsequently be released, step 58.

Implementations of the presently disclosed subject matter may be implemented in, and used with, a variety of component and network architectures. Any device capable of performing arithmetic operations on data is considered a "computer" or "computing device" for purposes of this disclosure, and may include general or special-purpose computing devices. The terms "computer" and "computing device" are synonymous herein. Example computers include cellular phones, smartphones, tablet computers, personal digital assistants, digital music players, wearable computers, laptop computers, personal computers (PC's), desktop computers, networked servers (e.g. "cloud based" servers), vehicle entertainment systems, global positioning systems, and in-flight entertainment systems. Vehicle entertainment systems, GPS, and in-flight entertainment systems are examples of special-purpose computing devices.

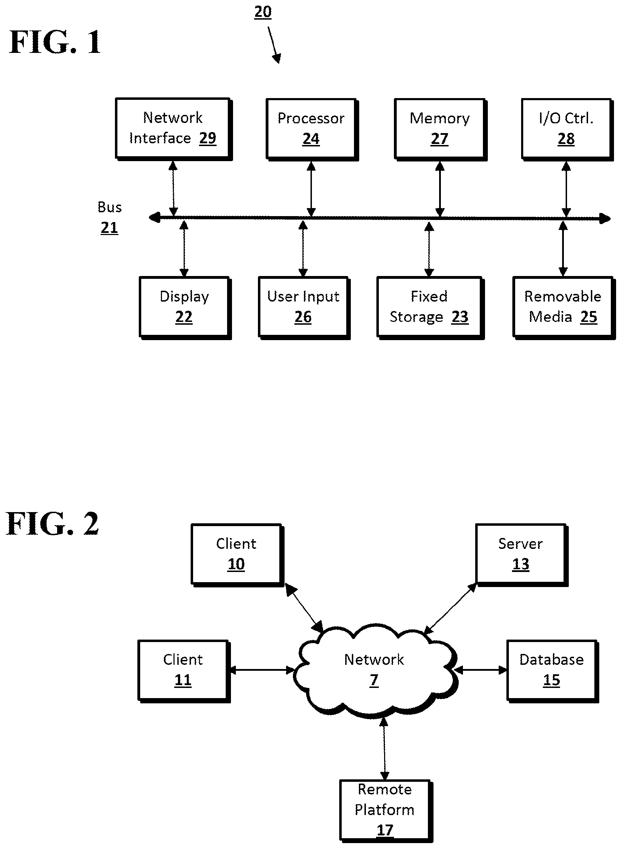

FIG. 1 is an example computer 20 suitable for implementing implementations of the presently disclosed subject matter. The computer 20 includes a bus 21 which interconnects major components of the computer 20, such as a central processor 24, a memory 27 (typically RAM, but which may also include ROM, flash RAM, or the like), an input/output controller 28, a user display 22, such as a display screen via a display adapter, a user input interface 26, which may include one or more controllers and associated user input devices such as a keyboard, mouse, and the like, and may be closely coupled to the I/O controller 28, fixed storage 23, such as a hard drive, flash storage, Fibre Channel network, SAN device, SCSI device, and the like, and a removable media component 25 operative to control and receive an optical disk, flash drive, and the like.

The bus 21 allows data communication between the central processor 24 and the memory 27, which may include read-only memory (ROM) or flash memory (neither shown), and random access memory (RAM) (not shown), as previously noted. The RAM is generally the main memory into which the operating system and application programs are loaded. The ROM or flash memory may contain, among other code, the Basic Input-Output system (BIOS) which controls basic hardware operation such as the interaction with peripheral components.
Applications resident with the computer 20 are generally stored on and accessed via a computer readable medium, such as a hard disk drive (e.g., fixed storage 23), an optical drive, floppy disk, or other storage medium 25.

The fixed storage 23 may be integral with the computer 20 or may be separate and accessed through other interfaces. A network interface 29 may provide a direct connection to a remote server via a telephone link, to the Internet via an internet service provider (ISP), or a direct connection to a remote server via a direct network link to the Internet via a POP (point of presence) or other technique. The network interface 29 may provide such connection using wireless techniques, including digital cellular telephone connection, Cellular Digital Packet Data (CDPD) connection, digital satellite data connection or the like. For example, the network interface 29 may allow the computer to communicate with other computers via one or more local, wide-area, or other networks, as shown in FIG. 2.

Many other devices or components (not shown) may be connected in a similar manner (e.g., document scanners, digital cameras and so on). Conversely, all of the components shown in FIG. 1 need not be present to practice the present disclosure. The components may be interconnected in different ways from that shown. The operation of a computer such as that shown in FIG. 1 is readily known in the art and is not discussed in detail in this application. Code to implement the present disclosure may be stored in computer-readable storage media such as one or more of the memory 27, fixed storage 23, removable media 25, or on a remote storage location.

FIG. 2 shows an example network arrangement according to an implementation of the disclosed subject matter. One or more clients 10, 11, such as local computers, smart phones, tablet computing devices, and the like may connect to other devices via one or more networks 7. The network may be a local network, wide-area network, the Internet, or any other suitable communication network or networks, and may be implemented on any suitable platform including wired and/or wireless networks. The clients may communicate with one or more servers 13 and/or databases 15. The devices may be directly accessible by the clients 10, 11, or one or more other devices may provide intermediary access such as where a server 13 provides access to resources stored in a database 15. The clients 10, 11 also may access remote platforms 17 or services provided by remote platforms 17 such as cloud computing arrangements and services. The remote platform 17 may include one or more servers 13 and/or databases 15.

More generally, various implementations of the presently disclosed subject matter may include or be embodied in the form of computer-implemented processes and apparatuses for practicing those processes. Implementations also may be embodied in the form of a computer program product having computer program code containing instructions embodied in non- transitory and/or tangible media, such as floppy diskettes, CD-ROMs, hard drives, USB (universal serial bus) drives, or any other machine readable storage medium, wherein, when the computer program code is loaded into and executed by a computer, the computer becomes an apparatus for practicing implementations of the disclosed subject matter. Implementations also may be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for practicing implementations of the disclosed subject matter. When implemented on a general-purpose microprocessor, the computer program code segments configure the microprocessor to create specific logic circuits. In some configurations, a set of computer-readable instructions stored on a computer-readable storage medium may be implemented by a general-purpose processor, which may transform the general-purpose processor or a device containing the general-purpose processor into a special- purpose device configured to implement or carry out the instructions. Implementations may be implemented using hardware that may include a processor, such as a general purpose microprocessor and/or an Application Specific Integrated Circuit (ASIC) that embodies all or part of the techniques according to implementations of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to implementations of the disclosed subject matter.

The foregoing description, for purpose of explanation, has been described with reference to specific implementations. However, the illustrative discussions above are not intended to be exhaustive or to limit implementations of the disclosed subject matter to the precise forms disclosed. Many modifications and variations are possible in view of the above teachings. The implementations were chosen and described in order to explain the principles of implementations of the disclosed subject matter and their practical applications, to thereby enable others skilled in the art to utilize those implementations as well as various implementations with various modifications as may be suited to the particular use contemplated.

## Claims

1. A method for specifying a media access control, MAC, address, comprising:
binding a first MAC address to a network interface (29) of a mobile computing device (20);
determining a first network address linked with the first MAC address;
determining a socket connection linked with the first network address for at least one application executing on the mobile computing device (20);
determining a second MAC address based upon a first event trigger;
binding the second MAC address to the network interface;
determining a second network address linked with the second MAC address;
upon expiration of a migration timer, closing each socket connection linked with the first network address for each at least one application connected with the first network address;
determining, for each application connected with each socket connection, a socket connection linked with the second network address; and
releasing the first MAC address and the first network address from the network interface (29) of the mobile computing device (20).

2. The method of claim 1, wherein the first event trigger comprises the mobile computing device enabling Wi-Fi.

3. The method of claim 1, wherein the first event trigger comprises the mobile computing device losing Wi-Fi connectivity.

4. The method of claim 1, wherein the first event trigger comprises the mobile computing device exiting a sleep mode.

5. The method of claim 1, wherein the first event trigger comprises the mobile computing device moving into a location covered by a location profile that specifies a MAC address change.

6. The method of claim 1, wherein the first event trigger comprises a selection of a geographic location label.

7. The method of claim 1, wherein the first event trigger comprises a selection of a MAC address from a list of available addresses.

8. The method of claim 1, wherein the first event trigger comprises a manual entry of a MAC address that acts as an instruction to enable a process to replace the MAC address of the computing device.

9. The method of any preceding claim, wherein the second MAC address is randomly defined.

10. A mobile computing device (20) comprising:
a processor (24);
a computer-readable storage medium; and
computer-readable instructions stored on the computer-readable storage medium and executable by the processor to perform functions comprising:
binding a first media access control, MAC, address to a network interface (29) of the mobile computing device;
determining a first network address linked with the first MAC address;
determining a socket connection linked with the first network address for at least one application executing on the mobile computing device (20);
determining a second MAC address based upon a first event trigger;
binding the second MAC address to the network interface (29);
determining a second network address linked with the second MAC address;
upon expiration of a migration timer, closing each socket connection linked with the first network address for each at least one application connected with the first network address;
determining, for each application connected with each socket connection, a socket connection linked with the second network address; and
releasing the first MAC address and the first network address from the network interface (29) of the mobile computing device (20).

11. The mobile computing device of claim 10, wherein the first event trigger comprises the mobile computing device enabling Wi-Fi, the mobile computing device losing Wi-Fi connectivity, or the mobile computing device exiting a sleep mode.

12. The mobile computing device of claim 10, wherein the first event trigger comprises the mobile computing device moving into a location covered by a location profile that specifies a MAC address change, a selection of a geographic location label, a selection of a MAC address from a list of available addresses, or a manual entry of a MAC address that acts as an instruction to enable a process to replace the MAC address of the computing device.

13. The mobile computing device of claim 10, 11 or 12, wherein the second MAC address is randomly defined.

14. A computer-readable storage medium comprising instructions which, when executed by a computer, cause the computer to carry out the method of any of claims 1 to 9.

15. A computer program comprising instructions which, when the program is executed by a computer, cause the computer to carry out the method of any of claims 1 to 9.

## Patentansprüche

1. Verfahren zum Spezifizieren einer MAC(Media Access Control)-Adresse, umfassend:
Binden der ersten MAC-Adresse an eine Netzwerkschnittstelle (29) eines mobilen Computergeräts (20);
Ermitteln einer ersten Netzwerkadresse, die mit der ersten MAC-Adresse verknüpft ist;
Ermitteln einer mit der ersten Netzwerkadresse verknüpften Socket-Verbindung für jede zumindest eine Anwendung, die auf dem mobilen Computergerät (20) ausgeführt wird;
Ermitteln einer zweiten MAC-Adresse basierend auf einem ersten Ereignisauslöser;
Binden der zweiten MAC-Adresse an die Netzwerkschnittstelle;
Ermitteln einer zweiten Netzwerkadresse, die mit der zweiten MAC-Adresse verknüpft ist;
nach Ablauf eines Migrationstimers, Schließen jeder mit der ersten Netzwerkadresse verknüpften Socket-Verbindung für zumindest eine Anwendung, die mit der ersten Netzwerkadresse verbunden ist;
Ermitteln, für jede Anwendung, die mit jeder Socket-Verbindung verbunden ist, einer mit der zweiten Netzwerkadresse verknüpfen Socket-Verbindung; und
Freistellen der ersten MAC-Adresse und der ersten Netzwerkadresse von der Netzwerkschnittstelle (29) des mobilen Computergeräts (20).

2. Verfahren nach Anspruch 1, wobei der erste Ereignisauslöser umfasst, dass das mobile Computergerät Wi-Fi aktiviert.

3. Verfahren nach Anspruch 1, wobei der erste Ereignisauslöser umfasst, dass das mobile Computergerät die Wi-Fi-Konnektivität verliert.

4. Verfahren nach Anspruch 1, wobei der erste Ereignisauslöser umfasst, dass das mobile Computergerät einen Schlafmodus verlässt.

5. Verfahren nach Anspruch 1, wobei der erste Ereignisauslöser umfasst, dass sich das mobile Computergerät an einen Standort bewegt, der durch ein Standortprofil abgedeckt ist, das eine MAC-Adressen-Änderung spezifiziert.

6. Verfahren nach Anspruch 1, wobei der erste Ereignisauslöser eine Auswahl einer Kennzeichnung eines geografischen Standorts umfasst.

7. Verfahren nach Anspruch 1, wobei der erste Ereignisauslöser eine Auswahl einer MAC-Adresse aus einer Liste verfügbarer Adressen umfasst.

8. Verfahren nach Anspruch 1, wobei der erste Ereignisauslöser eine manuelle Eingabe einer MAC-Adresse umfasst, die als eine Anweisung dafür wirkt, einem Prozess zu ermöglichen, die MAC-Adresse des Computergeräts zu ersetzen.

9. Verfahren nach einem der vorhergehenden Ansprüche, wobei die zweite MAC-Adresse nach dem Zufallsprinzip definiert wird.

10. Mobiles Computergerät (20), umfassend:
einen Prozessor (24);
ein computerlesbares Speichermedium; und
computerausführbare Anweisungen, die auf dem computerlesbaren Speichermedium gespeichert und durch den Prozessor ausführbar sind, um Funktionen durchzuführen, die Folgendes umfassen:
Binden einer ersten MAC(Media Access Control)-Adresse an eine Netzwerkschnittstelle (29) des mobilen Computergeräts;
Ermitteln einer ersten Netzwerkadresse, die mit der ersten MAC-Adresse verknüpft ist;
Ermitteln einer mit der ersten Netzwerkadresse verknüpften Socket-Verbindung für jede zumindest eine Anwendung, die auf dem mobilen Computergerät (20) ausgeführt wird;
Ermitteln einer zweiten MAC-Adresse basierend auf einem ersten Ereignisauslöser;
Binden der zweiten MAC-Adresse an die Netzwerkschnittstelle (29);
Ermitteln einer zweiten Netzwerkadresse, die mit der zweiten MAC-Adresse verknüpft ist;
nach Ablauf eines Migrationstimers, Schließen jeder mit der ersten Netzwerkadresse verknüpften Socket-Verbindung für jede zumindest eine Anwendung, die mit der ersten Netzwerkadresse verbunden ist;
Ermitteln, für jede Anwendung, die mit jeder Socket-Verbindung verbunden ist, einer mit der zweiten Netzwerkadresse verknüpfen Socket-Verbindung; und
Freistellen der ersten MAC-Adresse und der ersten Netzwerkadresse von der Netzwerkschnittstelle (29) des mobilen Computergeräts (20).

11. Mobiles Computergerät nach Anspruch 10, wobei der erste Ereignisauslöser umfasst, dass das mobile Computergerät Wi-Fi aktiviert, dass das mobile Computergerät die Wi-Fi-Konnektivität verliert, oder dass das mobile Computergerät einen Schlafmodus verlässt.

12. Mobiles Computergerät nach Anspruch 10, wobei der erste Ereignisauslöser eine Bewegung des mobilen Computergeräts an einen Standort, der durch ein Standortprofil, das eine MAC-Adressen-Änderung spezifiziert, abgedeckt ist, eine Auswahl einer geografischen Kennzeichnung, eine Auswahl einer MAC-Adresse aus einer Liste verfügbarer Adressen oder eine manuelle Eingabe einer MAC-Adresse, die als eine Anweisung dafür wirkt, einem Prozess zu ermöglichen, die MAC-Adresse des Computergeräts zu ersetzen, umfasst.

13. Mobiles Computergerät nach Anspruch 10, 11 oder 12, wobei die zweite MAC-Adresse nach dem Zufallsprinzip definiert ist.

14. Computerlesbares Speichermedium, das Anweisungen umfasst, die, bei Ausführung durch einen Computer, den Computer veranlassen, das Verfahren nach einem der Ansprüche 1 bis 9 durchzuführen.

15. Computerprogramm, das Anweisungen umfasst, die, bei Ausführung des Programms durch einen Computer, den Computer veranlassen, das Verfahren nach einem der Ansprüche 1 bis 9 durchzuführen.

## Revendications

1. Procédé de spécification d'une adresse de contrôle d'accès au support, MAC, comprenant :
la liaison d'une première adresse MAC à une interface réseau (29) d'un dispositif informatique mobile (20) ;
la détermination d'une première adresse réseau liée à la première adresse MAC ;
la détermination d'une connexion de socket liée à la première adresse réseau pour au moins une application exécutée sur le dispositif informatique mobile (20) ;
la détermination d'une deuxième adresse MAC basée sur un premier déclencheur d'événement ;
la liaison de la deuxième adresse MAC à l'interface réseau ;
la détermination d'une deuxième adresse réseau liée à la deuxième adresse MAC ;
à l'expiration d'un délai de migration, la fermeture de chaque connexion de socket liée à la première adresse réseau pour au moins une application connectée à la première adresse réseau ;
la détermination, pour chaque application connectée à chaque connexion de socket, d'une connexion de socket liée à la deuxième adresse réseau ; et
la libération de la première adresse MAC et de la première adresse réseau de l'interface réseau (29) du dispositif informatique mobile (20).

2. Procédé selon la revendication 1, dans lequel le premier événement déclencheur comprend le dispositif informatique mobile qui active le Wi-Fi.

3. Procédé selon la revendication 1, dans lequel le premier événement déclencheur comprend la perte de connectivité Wi-Fi par l'appareil informatique mobile.

4. Procédé selon la revendication 1, dans lequel le premier événement déclencheur comprend la sortie du dispositif informatique mobile d'un mode de veille.

5. Procédé selon la revendication 1, dans lequel le premier événement déclencheur comprend le déplacement du dispositif informatique mobile dans un emplacement couvert par un profil d'emplacement qui spécifie un changement d'adresse MAC.

6. Procédé selon la revendication 1, dans lequel le premier événement déclencheur comprend une sélection d'une étiquette de localisation géographique.

7. Procédé selon la revendication 1, dans lequel le premier événement déclencheur comprend une sélection d'une adresse MAC à partir d'une liste d'adresses disponibles.

8. Procédé selon la revendication 1, dans lequel le premier événement déclencheur comprend une entrée manuelle d'une adresse MAC qui agit comme une instruction pour activer à un processus afin de remplacer l'adresse MAC du dispositif informatique.

9. Procédé selon l'une quelconque des revendications précédentes, dans lequel la deuxième adresse MAC est définie aléatoirement.

10. Dispositif informatique mobile (20) comprenant :
un processeur (24) ;
un support de stockage lisible par ordinateur ; et
des instructions lisibles par ordinateur stockées sur le support de stockage lisible par ordinateur et exécutables par le processeur pour réaliser des fonctions comprenant :
la liaison d'une première adresse de contrôle d'accès au support, MAC, à une interface réseau (29) du dispositif informatique mobile ;
la détermination d'une première adresse réseau liée à la première adresse MAC ;
la détermination d'une connexion de socket liée à la première adresse réseau pour au moins une application exécutée sur le dispositif informatique mobile (20) ;
la détermination d'une deuxième adresse MAC basée sur un premier déclencheur d'événement ;
la liaison de la deuxième adresse MAC à l'interface réseau (29) ;
la détermination d'une deuxième adresse réseau liée à la deuxième adresse MAC ;
à l'expiration d'un délai de migration, la fermeture de chaque connexion de socket liée à la première adresse réseau pour au moins une application connectée à la première adresse réseau ;
la détermination, pour chaque application connectée à chaque connexion de socket, d'une connexion de socket liée à la deuxième adresse réseau ; et
la libération de la première adresse MAC et de la première adresse réseau de l'interface réseau (29) du dispositif informatique mobile (20).

11. Dispositif informatique mobile selon la revendication 10, dans lequel le premier événement déclencheur comprend l'activation du Wi-Fi par le dispositif informatique mobile, la perte de la connectivité Wi-Fi par le dispositif informatique mobile ou la sortie d'un mode de veille par le dispositif informatique mobile.

12. Dispositif informatique mobile selon la revendication 10, dans lequel le premier événement déclencheur comprend le déplacement du dispositif informatique mobile dans un emplacement couvert par un profil d'emplacement qui spécifie un changement d'adresse MAC, une sélection d'une étiquette d'emplacement géographique, une sélection d'une adresse MAC à partir d'une liste d'adresses disponibles ou une entrée manuelle d'une adresse MAC qui agit comme une instruction pour activer un processus afin de remplacer l'adresse MAC du dispositif informatique.

13. Dispositif informatique mobile selon la revendication 10, 11 ou 12, dans lequel la deuxième adresse MAC est définie aléatoirement.

14. Support de stockage lisible par ordinateur comprenant des instructions qui, lorsqu'elles sont exécutées par un ordinateur, amènent l'ordinateur à effectuer le procédé selon l'une quelconque des revendications 1 à 9.

15. Produit de programme informatique comprenant des instructions qui, lorsque le programme est exécuté par un ordinateur, amènent l'ordinateur à effectuer le procédé de l'une quelconque des revendications 1 à 9.
